**Europäisches Patentamt**

**European Patent Office**

**Office européen des brevets**

(19)

(11) Veröffentlichungsnummer: **0 156 956**
**B1**

(12) # EUROPÄISCHE PATENTSCHRIFT

(45) Veröffentlichungstag der Patentschrift:
**01.06.88**

(51) Int. Cl.⁴: **H 01 R 13/59**

(21) Anmeldenummer: **84112781.4**

(22) Anmeldetag: **23.10.84**

(54) Vorrichtung zum Halten eines elektrischen Kabels in einem Steckergehäuse.

(30) Priorität: **14.03.84 DE 3409350**

(43) Veröffentlichungstag der Anmeldung:
**09.10.85 Patentblatt 85/41**

(45) Bekanntmachung des Hinweises auf die Patenterteilung:
**01.06.88 Patentblatt 88/22**

(84) Benannte Vertragsstaaten:
**AT BE CH DE FR GB IT LI LU NL SE**

(56) Entgegenhaltungen:
**EP - A - 0 080 295**
**DE - A - 3 116 027**
**US - A - 2 446 262**
**US - A - 2 974 186**

(73) Patentinhaber: **Nixdorf Computer Aktiengesellschaft,
Fürstenallee 7, D-4790 Paderborn (DE)**

(72) Erfinder: **Frers, Klaus-Dieter, Antoniusstrasse 6,
D-4795 Delbrück (DE)**

(74) Vertreter: **Patentanwälte Schaumburg & Thoenes,
Mauerkircherstrasse 31 Postfach 86 07 48,
D-8000 München 80 (DE)**

## Beschreibung

Die Erfindung betrifft eine Vorrichtung zum Halten eines elektrischen Kabels in einem Steckergehäuse durch Umschliessen des Kabels mit einem Klemmkörper, der durch das Zusammenfügen von Teilen des Steckergehäuses in seinen Klemmzustand gebracht wird und aus zwei gleichen Klemmschalen besteht, die an ihren Längskanten mit einer in Längsrichtung verlaufenden Verzahnung ineinandergreifen.

Eine Vorrichtung dieser Art dient dazu, ein elektrisches Kabel, dessen Ende in einem Steckergehäuse mit Steckerelementen verbunden ist, so zu verankern, dass die Steckerelemente durch Zugbeanspruchung des Kabels nicht belastet werden. In dem Steckergehäuse befindet sich die Vorrichtung daher zwischen den Steckerelementen und der hinteren Öffnung, durch die hindurch das Kabel in das Steckergehäuse eingeführt ist. Das Steckergehäuse kann aus zwei den Stecker in Längsrichtung teilenden Hälften bestehen, in deren eine das Kabel mit den es umschliessenden Klemmschalen eingelegt wird, worauf dann die andere angefügt und mit der ersten z. B. verschraubt wird. Bei einem durch die US-A 2446262 bekannten Rundstecker sind zwei ein längsgeteiltes Steckergehäuse bildende gleiche Klemmschalen durch eine Schraubkappe miteinander verklemmt. Wenn die beiden Klemmschalen zusammengefügt werden, so werden sie durch das Ineinandergreifen von an ihren Längskanten vorgesehenen Verzahnungen aufeinander ausgerichtet und durch das Zusammenfügen in Druckeinwirkung an dem Kabel gebracht, so dass sie dieses zwischen sich verklemmen und es so nach Aufschrauben der Schraubkappe festhalten.

Ein Nachteil dieses Prinzips der Verankerung eines Kabels in einem Steckergehäuse besteht darin, dass die beiden Klemmschalen meist nicht exakt einander gegenüberliegend an dem Kabel zur Anlage kommen, da dies manuell geschieht. Wenn die beiden Klemmschalen auch nur geringfügig in ihrer Querrichtung gegeneinander verschoben sind, kann das zwischen ihnen liegende Kabel bei dem durch das Klemmen bewirkten gegenseitigen Ausrichten und gleichzeitiger Druckeinwirkung auf die Klemmschalen verletzt werden. Dies kann bei dadurch schadhafter Kabelisolierung zu Kurzschlüssen zwischen einzelnen Kabeladern oder bei schadhafter Kabelabschirmung zu erhöhter Störanfälligkeit von Geräten führen, an die das Kabel angeschlossen ist.

Es ist Aufgabe der Erfindung, eine Vorrichtung zum Halten eines elektrischen Kabels in einem Steckergehäuse anzugeben, bei der die Klemmschalen so ausgebildet sind, dass Beschädigungen eines zwischen ihnen gehaltenen Kabels zuverlässig vermieden werden.

Eine Vorrichtung eingangs genannter Art ist zur Lösung dieser Aufgabe erfindungsgemäss derart ausgebildet, dass sich die Klemmschalen an den ineinandergreifenden Abschnitten zur Bildung zur Hauptklemmrichtung paralleler Gleitflächen gegenseitig umschliessen.

Durch die Erfindung wird verhindert, dass die beiden Klemmschalen in Längs- und in Querrichtung gegeneinander verschoben werden, während sie zum Verklemmen eines Kabels aufeinander zu bewegt werden. Durch die spezielle Anordnung von Gleitflächen in Hauptklemmrichtung an sich gegenseitig umschliessenden Abschnitten liegen die Gleitflächen der Verzahnung nicht ausschliesslich quer zur Kabellängsachse, sondern auch in Längsrichtung. Sobald die Klemmschalen ineinandergreifen, ist also eine unerwünschte gegenseitige Verlagerung nicht mehr möglich, ohne dass hierzu ein besonderes Zentrierelement wie etwa eine Schraubkappe benötigt wird.

Wenn die Klemmschalen nach Art einer Rechteckverzahnung ineinandergreifen, so ist eine besonders genaue gegenseitige Führung beim Klemmvorgang möglich.

Zweckmässig haben die Klemmschalen an ihrer Innenseite Erhebungen, die vorzugsweise länglich ausgebildet sind und dabei zumindest annähernd in Umfangsrichtung verlaufen. Solche Erhebungen, die z. B. noppenartig oder rippenförmig ausgebildet sein können, bewirken eine entsprechend punktförmige oder linienförmige Druckeinwirkung der Klemmschalen auf das zwischen ihnen gehaltene Kabel, wodurch eine Verbesserung der Halteeigenschaften gegenüber einer rein flächigen Anlage der Klemmschalen am Kabel erreicht werden kann.

Vorteilhaft bestehen die Klemmschalen aus einem elektrisch leitfähigen Material, wodurch es möglich ist, eine einwandfreie elektrische Masseverbindung mit dem Mantel eines abgeschirmten Kabels herzustellen.

Ausführungsbeispiele der Erfindung werden im folgenden anhand der Figuren beschrieben. Es zeigen:

Fig. 1 einen Teillängsschnitt eines elektrischen Rundsteckers mit einer Vorrichtung zur zugentlastenden Halterung eines Kabels,

Fig. 2 den Querschnitt einer Vorrichtung nach Fig. 1 im Klemmzustand,

Fig. 3 eine Darstellung ähnlich Fig. 2, jedoch im Klemmzustand an einem dickeren Kabel,

Fig. 4 eine Klemmschale für eine Vorrichtung zur Halterung eines Kabels, die aus zwei gleichen Klemmschalen zu bilden ist, und

Fig. 5 eine Vorrichtung mit zwei Klemmschalen nach Fig. 4.

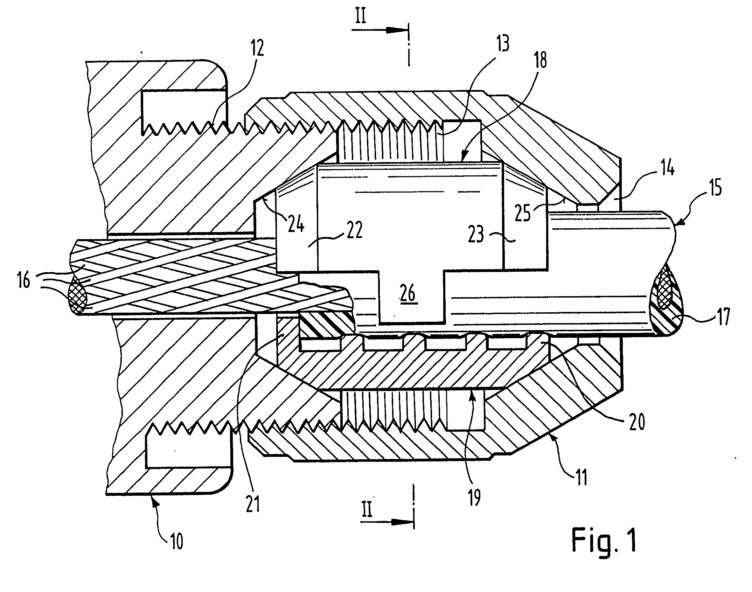

In Fig. 1 ist in einem Teillängsschnitt ein elektrischer Rundstecker dargestellt, der aus zwei Steckerteilen 10 und 11 besteht, die an einem Aussengewinde 12 bzw. Innengewinde 13 miteinander verschraubt sind. In dem kappenförmig ausgebildeten hinteren Steckerteil 11 ist eine hintere Öffnung 14 vorgesehen, in die ein elektrisches Kabel 15 eingeführt ist. Dieses läuft durch den Steckerteil 11 hindurch in den vorderen Steckerteil 10, wo seine einzelnen nicht dargestellten Adern in nicht dargestellter Weise mit Steckerelementen elektrisch verbunden sind. Bei dem in Fig. 1 gezeigten Beispiel ist das Kabel 15 abgeschirmt, wobei sein Abschirmmantel als ein Leitergeflecht 16 ausgebildet und normalerweise, d. h. ausserhalb des Steckers, durch eine Kabelisolierung 17 geschützt ist.

Innerhalb der miteinander verschraubten Steckerteile 10 und 11 ist eine Vorrichtung zur zugentlastenden Halterung des Kabels 15 angeordnet, die aus zwei Klemmschalen 18 und 19 besteht. Die untere Klemmschale 19 ist im Längsschnitt gezeigt, so dass an ihr innere Erhebungen 20 zu erkennen sind, die an der Kabelaussenseite, d. h. an der Isolierung 17, anliegen und auf diese eine Klemmkraft ausüben. Die Isolierung 17 verläuft bis an das in Fig. 1 links liegende Ende der beiden Klemmschalen 18 und 19, wo diese eine Innenumfangsrippe 21 aufweisen, an die die Isolierung 17 anstösst. Hierdurch wird bei Kabeln mit Isoliermantel das Anlegen der Klemmschalen erleichtert.

Die Klemmschalen 18 und 19 haben bei dem in Fig. 1 gezeigten Ausführungsbeispiel eine abgeschrägte äussere Vorder- bzw. Hinterkante 22 bzw. 23, die jeweils an entsprechend abgeschrägten Innenflächen 24 bzw. 25 der beiden Steckerteile 10 und 11 anliegt. Wenn diese beiden Steckerteile 10 und 11 miteinander verschraubt werden, so wird an ihren schrägen Innenflächen 24 und 25 ein Druck auf die beiden Klemmschalen 18 und 19 ausgeübt, der ihr Zusammendrücken senkrecht zu der in Fig. 1 in der Zeichenebene liegenden Längsachse des Kabels 15 und damit dessen Verklemmen zwischen den beiden Klemmschalen 18 und 19 bewirkt.

In Fig. 1 ist ferner zu erkennen, dass die obere Klemmschale 18 einen rechteckförmigen Vorsprung 26 hat, der in eine entsprechend rechteckförmige Aussparung hineinragt, die in der unteren Klemmschale 19 vorgesehen, in Fig. 1 jedoch nicht dargestellt ist. Auf diese Weise greifen die beiden Klemmschalen 18 und 19 ineinander, so dass sie in der Hauptklemmrichtung, d. h. in Fig. 1 durch Bewegung in der Zeichenebene von oben nach unten bzw. von unten nach oben, zusammengefügt werden können bzw. gegeneinander verschiebbar sind. Anstelle dieses Ineinandergreifens nach Art einer Rechteckverzahnung können auch andere Ausbildungen vorgesehen sein, beispielsweise nach Art einer Schrägverzahnung.

Aus der Darstellung in Fig. 1 geht hervor, dass die beiden Klemmschalen 18 und 19, wenn sie an dem Kabel 15 anliegend so zusammengefügt werden, dass der Vorsprung 26 der oberen Klemmschale 18 in die entsprechende Aussparung der unteren Klemmschale 19 eingreift, zwangsläufig in Längsrichtung des Kabels 15 genau aufeinander ausgerichtet sind. Der Vorsprung 26 sorgt zusammen mit der Aussparung in der unteren Klemmschale 19 dafür, dass beide Klemmschalen 18 und 19 in Klemmrichtung zusammengefügt werden können, dass sie beim Zusammenschrauben der beiden Steckerteile 10 und 11 in genauer gegenseitiger Ausrichtung einen gleichmässig verteilten Druck auf das Kabel 15 ausüben. Dadurch drücken sich die Vorsprünge 20 an der Innenseite der Klemmschalen etwas in die Kabelisolierung 17 ein, so dass diese zuverlässig festgehalten werden kann.

Es ist bei dieser Anordnung äusserst einfach, die beiden Klemmschalen 18 und 19 am Kabel 15 anzubringen, denn sie müssen lediglich so angelegt werden, dass die jeweilige Innenumfangsrippe 21 an das vordere Ende der Kabelisolierung 17 anstösst. Dann stehen der Vorsprung 26 und die entsprechende Aussparung der unteren Klemmschale 19 einander so gegenüber, dass das gegenseitige Eingreifen leicht erreicht wird. Die gesamte Anordnung wird dann mit dem nach vorn hervorstehenden Kabel 15 in den Steckerteil 10 eingesetzt, und der Steckerteil 11 wird dann auf den Steckerteil 10 aufgeschraubt, so dass er die Gesamtanordnung aus Kabel 15 und Klemmschalen 18 und 19 kappenartig einschliesst. Dabei kann das Leitergeflecht 16 auch nach hinten auf die Klemmschalen 18 und 19 gelegt und dadurch an dem Steckerteil 10 verklemmt sein, um z. B. eine Masseverbindung herzustellen.

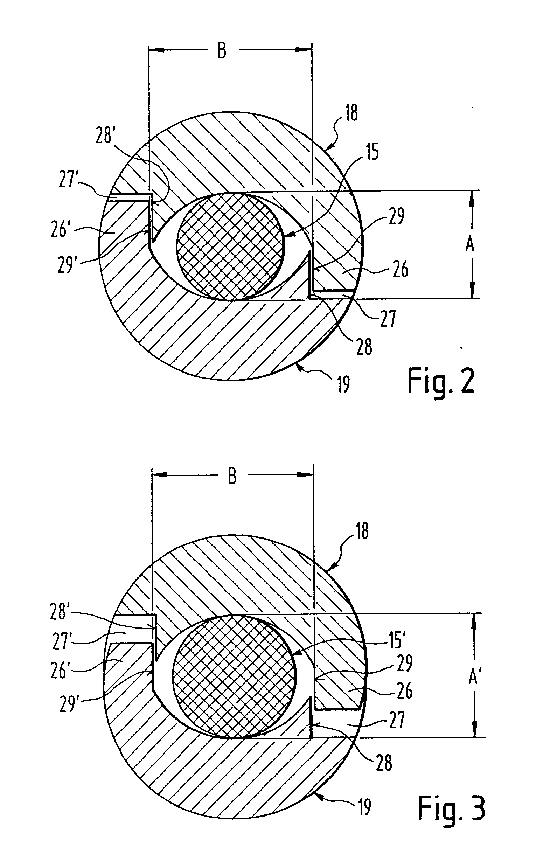

In Fig. 2 ist der Schnitt II–II aus Fig. 1 dargestellt, wobei jedoch nur die beiden Klemmschalen 18 und 19 sowie das zwischen ihnen liegende Kabel 15 gezeigt sind. Der Vorsprung 26 der oberen Klemmschale 18 sitzt in einer Aussparung 27 der unteren Klemmschale 19. Gleichzeitig ist zu erkennen, dass die untere Klemmschale 19 eine Gleitfläche 28 hat, die die Aussparung 27 zur Mitte der Klemmschale 19 hin begrenzt und einer entsprechenden Gleitfläche 29 der oberen Klemmschale 18 gegenübersteht. Beide Gleitflächen 28 und 29 ermöglichen eine gegenseitige Verschiebung der beiden Klemmschalen 18 und 19 bezüglich der Darstellung in Fig. 2 in vertikaler Richtung, d. h. in der Hauptklemmrichtung. Fig. 2 zeigt ferner, dass die beiden Klemmschalen 18 und 19 an ihren beiden anderen Längskanten entsprechend ausgebildet sind, wobei die untere Klemmschale 19 einen Vorsprung 26' hat, der in einer Aussparung 27' der oberen Klemmschale 18 sitzt und wobei einander gegenüberstehende Gleitflächen 29' an der unteren Klemmschale 19 und 28' an der oberen Klemmschale 18 ausgebildet sind. Die Gleitflächen 28, 29, 28' und 29' liegen untereinander parallel, so dass mit der in Fig. 2 gezeigten Anordnung einerseits das gegenseitige Verschieben der Klemmschalen 18 und 19 nur in Hauptklemmrichtung gewährleistet ist, andererseits ein gegenseitiges Verschieben bzw. Verlagern der Klemmschalen 18 und 19 quer zur Kabellängsachse zuverlässig vermieden wird.

Fig. 2 zeigt ferner, dass die innere Formgebung der beiden Klemmschalen 18 und 19 so getroffen ist, dass die Höhe A des lichten Querschnitts kleiner als dessen Breite B ist. Das Kabel 15 bestimmt durch seine Dicke, wie weit die beiden Klemmschalen 18 und 19 zusammengedrückt werden können, um ein zuverlässiges Halten des Kabels 15 zwischen ihnen zu erreichen. Im dargestellten Ausführungsbeispiel sind die beiden Klemmschalen 18 und 19 innen kontinuierlich mit einem Radius gekrümmt, der grösser als der Krümmungsradius der Aussenkontur ist. Das Kabel 15 kann zwar durch die beiden Klemmschalen 18 und 19 etwas zusammengedrückt werden, jedoch ist beiderseits des Kabels 15 ausreichend freier Raum vorhanden, in den hinein sich das Kabel 15 verbreitern kann, ohne dass seitliche Teile des Kabels 15 zwischen die unmittelbar aneinanderliegenden Teile der beiden Klemmschalen 18 und 19 gelangen und beschädigt werden können.

An dieser Stelle ist darauf hinzuweisen, dass die Aussen- und Innenkontur der beiden Klemmschalen bei einer Vorrichtung nach der Erfindung nicht kontinuierlich gekrümmt, sondern auch etwa polygonartig ausgeführt sein kann. So ist beispielsweise ein sechseckförmiger Querschnitt denkbar, der aussen zweckmässig entsprechend geformte Steckerteile voraussetzt, während im Innenraum insbesondere bei der in Fig. 2 gezeigten Ausführung mit gegenüber der Höhe A grösserer Breite B durch Ausbildung mehrerer ebener Anlageflächen am Kabel gegebenenfalls eine noch bessere Halterung beim Verklemmen erzielt werden kann.

Fig. 3 zeigt eine Darstellung ähnlich Fig. 2, jedoch mit einem gegenüber Fig. 2 dickeren Kabel 15'. Die beiden Klemmschalen 18 und 19 haben somit einen grösseren Abstand zueinander als in Fig. 2 gezeigt. Durch die anhand der Fig. 2 erläuterte innere Formgebung der beiden Klemmschalen 18 und 19 ist jedoch auch hier erreicht, dass die Höhe A' kleiner als die Breite B ist. Beim weiteren Zusammendrücken der beiden Klemmschalen 18 und 19 gegenüber der in Fig. 3 gezeigten Lage wird das Kabel 15' zwar durch entsprechende Verformung breiter werden, jedoch wäre auch hier nicht zu befürchten, dass Teile des Kabels 15' dort zwischen die beiden Klemmschalen 18 und 19 geraten, wo sie beschädigt werden können. Es ist ausserdem zu erkennen, dass auch in der in Fig. 3 gezeigten Stellung der beiden Klemmschalen 18 und 19 eine Sicherung gegen eine Verlagerung quer zur Hauptklemmrichtung dadurch gegeben ist, dass die Gleitflächen 28, 29, 28' und 29' einander gegenüberstehen.

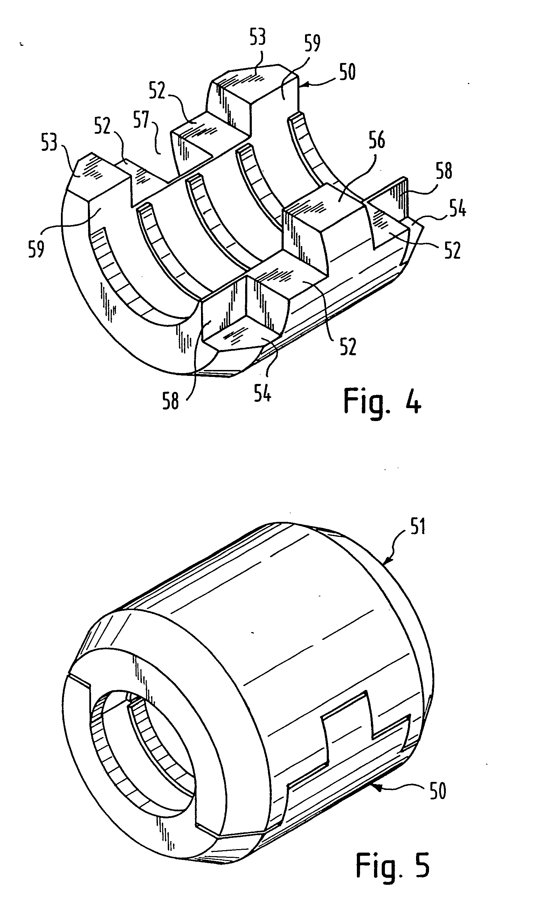

Fig. 4 zeigt eine Klemmschale 50, die an ihrer Innenseite gleichartig wie die bereits beschriebenen Klemmschalen ausgebildet ist. Diese Klemmschale 50 ermöglicht jedoch infolge ihrer Formgebung das Zusammensetzen mit einer weiteren, identisch ausgebildeten Klemmschale 51 zu einer Vorrichtung, die in Fig. 5 dargestellt ist. Die Klemmschale 50 hat in ihrer Längsrichtung verlaufende Begrenzungen, die zueinander komplementär augebildet sind. Von den eigentlichen Längskanten verbleiben nur die Flächen 52, die erkennen lassen, dass es sich hier um einen im wesentlichen halbzylindrischen Körper handelt. An der einen Seite ist ein Vorsprung 56, an der anderen Seite eine Aussparung 57 vorgesehen. Ergänzt werden diese Elemente durch zwei Vorsprünge 53 beiderseits der Aussparung 57 und durch zwei Aussparungen 54 beiderseits des Vorsprungs 56. Die Aussparungen 54 haben Gleitflächen 58, die in Hauptklemmrichtung liegen. Eine entsprechend angeordnete Gleitfläche hat auch die Aussparung 57, was in Fig. 4 nicht zu erkennen ist. Ferner sind entsprechende Gleitflächen an den Vorsprüngen 53 bei 59 sowie an der Innenseite des Vorsprungs 56 ausgebildet, die in Fig. 4 nicht zu erkennen ist.

Wird eine so ausgebildete Klemmschale 50 mit einer weiteren Klemmschale identischer Formgebung zusammengesetzt, so ergibt sich die in Fig. 5 gezeigte Vorrichtung mit zwei Klemmschalen 50 und 51. Eine solche Vorrichtung ist in der Fertigung besonders kostengünstig, da sie aus zwei gleichartigen Teilen besteht. Sie eignet sich deshalb besonders zur Massenfertigung.

Auch in Fig. 4 gezeigte Ausbildung der Klemmschalen 50 und 51 zeigt, dass beide Klemmschalen 50 und 51 beim Zusammensetzen der Vorrichtung nach Fig. 5 einander umschliessen. Dies ist besonders bei halbzylindrischen Klemmschalen erforderlich, um eine gegenseitige Verlagerung quer zur Längsachse der Vorrichtung zu vermeiden. Das gegenseitige Umschliessen erfolgt an den Gleitflächen 58 und 59 sowie an den Gleitflächen 28 und 29 bzw. 28' und 29' in Fig. 2 und 3.

Abweichend von den dargestellten Zylinderformen kann eine Vorrichtung nach der Erfindung auch jede andere geeignete Aussenkontur haben, was weitgehend von der inneren Formgebung eines sie aufnehmenden Steckers abhängt. Es sind z. B. quadratische, sechseckige oder sonstige polygonale Querschnitte denkbar.

**Patentansprüche**

1. Vorrichtung zum Halten eines elektrischen Kabels (15), in einem Steckergehäuse durch Umschliessen des Kabels (15) mit einem Klemmkörper, der durch das Zusammenfügen von Teilen des Steckergehäuses in seinen Klemmzustand gebracht wird und aus zwei gleichen Klemmschalen (50, 51) besteht, die an ihren Längskanten mit einer in Längsrichtung verlaufenden Verzahnung ineinandergreifen, dadurch gekennzeichnet, dass sich die Klemmschalen (50, 51) an den ineinandergreifenden Abschnitten (53, 54, 56, 57) zur Bildung zur Hauptklemmrichtung paralleler Gleitflächen (58, 59) gegenseitig umschliessen.

2. Vorrichtung nach Anspruch 1, dadurch gekennzeichnet, dass die Klemmschalen (50, 51) nach Art einer Rechteckverzahnung ineinandergreifen.

3. Vorrichtung nach Anspruch 1 oder 2, dadurch gekennzeichnet, dass die Klemmschalen (50, 51) an ihrer Innenseite Erhebungen (20) aufweisen, die vorzugsweise länglich ausgebildet sind und dabei zumindest annähernd in Umfangsrichtung verlaufen.

4. Vorrichtung nach einem der vorhergehenden Ansprüche, dadurch gekennzeichnet, dass die Klemmschalen (50, 51) an einem Ende eine Innenumfangsrippe (21) aufweisen, die jeweils höher als an den Innenseiten der Klemmschalen (50, 51) vorhandene Erhebungen (20) ist.

5. Vorrichtung nach einem der vorhergehenden Ansprüche, dadurch gekennzeichnet, dass die Klemmschalen (50, 51) aus einem elektrisch leitfähigen Material bestehen.

**Claims**

1. Device for holding an electrical cable (15) in a plug housing by enclosing the cable (15) with a clamping member which is brought into its clamping state by joining together parts of the plug housing and consists of two equal clamping shells (50, 51) interlocking on their lengthwise edges with a serration oriented in longitudinal direction, characterized in that the clamping shells (50, 51) enclose each other at the interlocking segments (53, 54, 56, 57) for building sliding surfaces (58, 59) parallel to the main clamping direction.

2. Device as claimed in claim 1, characterized in that the clamping shells (50, 51) interlock in each other in the manner of a rectangular serration.

3. Device as claimed in claim 1 or 2, characterized in that the clamping shells (50, 51) on their inside have elevations (20) which preferably are made oblong and which run at least approximately in the circumferential direction.

4. Device as claimed in any of the foregoing claims, characterized in that the clamping shells (50, 51) have an inner circumferential rib (21) at one end, said rib being higher than the elevations (20) present on the inside of the clamping shells (50, 51).

5. Device as claimed in any of the foregoing claims, characterized in that the clamping shells (50, 51) consist of an electrically conductive material.

**Revendications**

1. Dispositif pour le maintien d'un câble électrique (15) dans un boîtier de connexion par l'enveloppement du câble (15) avec un corps de blocage qui est mis à son état de serrage par l'assemblage de pièces du boîtier de connexion, et qui est constitué par deux coquilles de serrage (50, 51) identiques qui s'engagent l'une avec l'autre par une denture s'étendant en sens longitudinal sur leurs bords longitudinaux, caractérisé en ce que les coquilles de serrage (50, 51) s'emboîtent mutuellement par des parties s'accrochant les unes avec les autres (53, 54, 56, 57) découpées pour la formation de surfaces de glissement parallèles à la direction principale de serrage.

2. Dispositif selon la revendication 1, caractérisé en ce que les coquilles de serrage (50, 51) s'accrochent les unes avec les autres par un type de denture rectangulaire.

3. Dispositif selon la revendication 1 ou 2, caractérisé en ce que les coquilles de serrage (50, 51) présentent sur leur face intérieure des protubérances (20) qui sont allongées de préférence et qui s'étendent au moins approximativement en sens périmétrique.

4. Dispositif selon une des revendications précédentes, caractérisé en ce que les coquilles de serrage (50, 51) présentent à une extrémité une nervure annulaire intérieure (21), qui est plus haute que les protubérances (20) existantes sur les faces intérieures des coquilles de serrage (50, 51).

5. Dispositif selon une des revendications précédentes, caractérisé en ce que les coquilles de serrage (50, 51) sont composées d'une matière électriquement conductrice.

Fig. 1

0156956

Fig. 2

Fig. 3

Fig. 4

Fig. 5